# DEMANDE DE BREVET EUROPEEN

(11) **EP 1 717 980 A1**
(43) Date de publication de la demande: **02.11.2006**
(21) Numéro de dépôt: 06113006.8
(22) Date de dépôt: 24.04.2006
(51) Int. Cl.: H04J 14/02

(54) **Dispositif de commutation optique modulaire et reconfigurable**

(30) Priorité: 25.04.2005 FR 0551051
(71) Demandeur: ALCATEL, 75008 Paris (FR)
(72) Inventeur: ZAMI, Thierry, 91300, MASSY (FR); PELOSO, Pierre, 75008, PARIS (FR)
(74) Mandataire: Sciaux, Edmond

(57) **Abrégé**

Un dispositif de commutation optique (D) comprend i) un premier étage comportant N premiers modules de diffusion (MS11-MS1N) comprenant chacun une première entrée couplée à une fibre optique (Fi) dédiée au transport de multiplex de canaux de longueurs d'onde différentes, et n premières sorties délivrant chacune au moins l'un des canaux multiplexés reçus par la première entrée, ii) un deuxième étage comportant Q deuxièmes modules de sélection (MS21-MS2Q) comprenant chacun une deuxième entrée recevant au moins un canal d'une longueur d'onde, et q deuxièmes sorties délivrant sélectivement l'un des canaux multiplexés reçus par la deuxième entrée, avec Q ≥Nxn, et iii) un troisième étage (E3) comportant un aiguilleur spatial comprenant, d'une part, M troisièmes entrées et M' troisièmes sorties, avec M' ≥M, certaines au moins des premières sorties étant respectivement couplées à des troisièmes entrées et certaines au moins des deuxièmes entrées étant respectivement couplées à des troisièmes sorties, et d'autre part, des moyens de couplage (MBF) propres à coupler chacune des troisièmes entrées à l'une des troisièmes sorties selon une combinaison entrées/sorties choisie, éventuellement modifiable.

## Description

L'invention concerne le domaine de la commutation optique, et plus particulièrement les dispositifs de commutation optique reconfigurables propres à aiguiller des canaux de longueurs d'onde multiplexés ou à multiplexer.

Les dispositifs de commutation considérés ici sont de type transparent, c'est-à-dire que les canaux qu'ils aiguillent demeurent constamment dans le domaine optique.

Les dispositifs de commutation précités sont par exemple utilisés en tant qu'interface d'entrée et/ou de sortie (ou « patch panel » ou encore panneau de raccordement) dans des noeuds de commutation de réseaux optiques à multiplexage de longueurs d'onde (ou (D)WDM pour « (Dense) Wavelength Division Multiplexing »).

Comme le sait l'homme de l'art, lorsqu'un dispositif de commutation optique agit en tant qu'interface d'entrée, il reçoit sur des ports d'entrée des canaux de longueurs d'onde différentes multiplexés (également appelés multiplex spectraux de signaux optiques) qu'il doit aiguiller individuellement (canal par canal) vers des ports de sortie respectifs sélectionnés en fonction d'une commande. Ses ports d'entrée sont habituellement couplés à des fibres optiques, tandis que ses ports de sortie sont habituellement couplés à des bornes d'entrée d'un commutateur électronique par l'intermédiaire d'une interface de conversion "optique-électrique" constituée de récepteurs optiques (ou « receivers »), typiquement des photodétecteurs.

Par ailleurs, lorsqu'un dispositif de commutation optique agit en tant qu'interface de sortie, il reçoit sur des ports d'entrée des canaux de longueurs d'onde différentes qu'il doit multiplexer et aiguiller vers des ports de sortie respectifs sélectionnés en fonction d'une commande. Ses ports d'entrée sont habituellement couplés à des bornes de sortie d'un commutateur électronique par l'intermédiaire d'une interface de conversion "électrique-optique" constituée d'émetteurs de signaux optiques mono-longueur d'onde, typiquement des sources laser dont la lumière est modulée. Ses ports de sortie sont habituellement couplés à des fibres optiques de sortie respectives.

Afin que les ressources spectrales d'un réseau optique soient utilisées de façon optimale, il est préférable que les interfaces d'entrée et/ou de sortie (patch panel) offrent une certaine flexibilité, ou en d'autres termes qu'elles soient au moins partiellement reconfigurables par une simple commande, et si possible sans intervention manuelle.

Pour utiliser de façon optimale les ressources disponibles des noeuds, il faut pouvoir modifier leur allocation en fonction des demandes de connexion dans les différentes fibres, c'est-à-dire pouvoir diminuer le nombre de canaux attribués à une fibre optique où le trafic décroît au profit d'une autre fibre optique où le trafic augmente. Pour atteindre cet objectif il faut que l'un au moins des récepteurs qui reçoit initialement un premier canal d'une première fibre optique puisse ultérieurement recevoir un second canal d'une seconde fibre optique. Lorsque l'interface d'entrée n'est pas reconfigurable, ce type de redistribution de canaux entre fibres optiques nécessite qu'un technicien manipule physiquement certain de ses constituants, ce qui prend du temps et peut endommager lesdits constituants.

Les fibres optiques de sortie correspondant généralement à des destinations différentes et devant véhiculer des trafics pouvant évoluer fortement, il est également avantageux de pouvoir modifier par une simple commande le nombres de canaux injectés dans chacune d'entre elles.

Un certain nombre de solutions ont été proposées pour conférer de la flexibilité aux dispositifs de commutation optiques (patch panels). Cependant, bien que flexibles ces dispositifs ne sont pas modulaires. Ils comprennent en effet un commutateur spatial qui est initialement dimensionné pour une capacité maximale de réseau, et donc (très) surdimensionné par rapport aux besoins initiaux. Or, compte tenu des coûts importants qu'occasionne l'implantation d'un nouveau réseau, il est préférable pour son opérateur de répartir lesdits coûts dans le temps en augmentant les capacités d'aiguillage des dispositifs de commutation en fonction des besoins, ce qui nécessite que les dispositifs de commutation soient non seulement reconfigurables, mais également modulaires.

La Demanderesse a proposé un dispositif de commutation reconfigurable et partiellement modulaire. Ce dispositif, qui est notamment décrit dans la demande de brevet français déposée le 17 septembre 2004 sous le n° 04 52078, comprend :
- un premier étage comprenant des premiers modules de sélection de longueurs d'onde dont les entrées constituent respectivement des ports d'entrée,
- un second étage comprenant des seconds modules de sélection de longueurs d'onde dont les sorties constituent respectivement des ports de sortie, et
- un étage intermédiaire comportant des coupleurs en étoiles (ou « star couplers ») réalisant un couplage de l'entrée de chaque second module de sélection du second étage à la sortie d'au moins deux premiers modules de sélection du premier étage.

On entend ici par « module de sélection de longueurs d'onde » (ou WSS pour « Wavelength Selective Switch »), un équipement comportant, lorsqu'il agit en tant que démultiplexeur, une entrée et plusieurs sorties et capable d'aiguiller chaque canal (spectral) reçu sur son entrée, de façon sélective en fonction d'un signal de commande, vers l'une de ses sorties.

Cet équipement réalise ainsi une fonction de démultiplexage programmable sur des canaux dont les fréquences optiques sont alignées sur une grille prédéterminée, permettant ainsi que chaque canal présent à l'entrée soit dirigé vers l'un des ports de sortie en fonction de sa longueur d'onde et d'une commande.

Ce même équipement peut aussi réaliser la fonction inverse (multiplexage) en échangeant les rôles des sorties et de l'entrée. Dans ce cas, il devient un équipement comportant plusieurs entrées et une sortie et permettant d'aiguiller des canaux spectraux (c'est-à-dire des signaux optiques portés par des longueurs d'onde respectives) reçus sur des entrées respectives, sélectivement en fonction des longueurs d'onde des canaux reçus et des entrées respectives et en fonction d'un signal de commande, vers la sortie de cet équipement. Il convient bien entendu que les canaux spectraux aiguillés vers la sortie aient des longueurs d'onde différentes. L'équipement réalise alors une fonction de multiplexage programmable permettant de fournir en sortie un canal sélectionné parmi les canaux reçus ou un multiplex de sortie constitué d'un ensemble de canaux sélectionnés parmi les canaux reçus.

Dans ce qui suit, on appellera « diffusion sélective » le démultiplexage programmable et « module de diffusion sélective » un module de sélection de longueurs d'onde de type WSS à une entrée et n sorties.

Par ailleurs, dans ce qui suit, on appellera « fusion sélective » le multiplexage spectral et « module de fusion sélective » un module de sélection de longueurs d'onde de type WSS à n entrées et une sortie. En outre, on appellera « fusion non sélective » le rassemblement de longueurs d'onde et « module de fusion non sélective » un coupleur optique à n entrées et une sortie.

Le dispositif de commutation reconfigurable, présenté ci-dessus, est effectivement modulaire dans la mesure où l'on peut augmenter le nombre de coupleurs en étoiles en fonction des besoins. Cependant, les coupleurs en étoiles, qui sont utilisés pour combiner les canaux (optiques) provenant de différentes fibres optiques, induisent certains inconvénients comme par exemple des pertes d'insertion élevées, qui limitent à des valeurs relativement basses (environ 32) le nombre de canaux pouvant « circuler » dans chaque fibre optique, et des blocages lorsque des canaux présentant des longueurs d'onde de même couleur doivent être combinés par un même coupleur.

Aucun dispositif de commutation n'étant entièrement satisfaisant, l'invention a donc pour but d'améliorer la situation.

Elle propose à cet effet un premier dispositif de commutation optique (ou interface de sortie) comprenant, d'une première part, un premier étage muni de premières entrées, pouvant être respectivement couplées à des fibres optiques dédiées au transport de canaux de longueurs d'onde différentes multiplexés, et de premières sorties, d'une deuxième part, un deuxième étage muni de deuxièmes entrées, pouvant recevoir chacune au moins un canal d'une longueur d'onde, et de deuxièmes sorties pouvant délivrer chacune un canal reçu sur l'une des deuxièmes entrées, et d'une troisième part, un troisième étage muni de troisièmes entrées couplées (au moins pour certaines) à des premières sorties et de troisièmes sorties couplées (au moins pour certaines) à des deuxièmes entrées.

Ce premier dispositif de commutation optique se caractérise par le fait que :
- son premier étage comporte N premiers modules de diffusion comprenant chacun une première entrée et n premières sorties pouvant chacune délivrer au moins l'un des canaux multiplexés reçus par la première entrée,
- son deuxième étage comporte Q deuxièmes modules de sélection comprenant chacun une deuxième entrée et q deuxièmes sorties pouvant chacune délivrer sélectivement l'un des canaux multiplexés reçus par la deuxième entrée, avec Q ≥Nxn, et
- son troisième étage comporte un aiguilleur spatial comprenant, d'une part, M troisièmes entrées et M' troisièmes sorties, avec M' ≥M, certaines au moins des premières sorties étant respectivement couplées à des troisièmes entrées et certaines au moins des deuxièmes entrées étant respectivement couplées à des troisièmes sorties, et d'autre part, des moyens de couplage capables de coupler chacune des troisièmes entrées à l'une des troisièmes sorties selon une combinaison entrées/sorties choisie.

On entend ici par « modules de diffusion » aussi bien des modules de diffusion sélective, tels que des modules de sélection de longueurs d'onde, que des modules de diffusion non sélective, tels que des coupleurs optiques.

Le premier dispositif de commutation optique selon l'invention peut comporter d'autres caractéristiques qui peuvent être prises séparément ou en combinaison, et notamment :
- son aiguilleur spatial peut être de type modulaire afin que les nombres M et M' puissent être adaptés en fonction des besoins définis par le nombre total de canaux à recevoir sur les premières entrées ;
- les premiers modules de diffusion peuvent être par exemple des coupleurs optiques (ou « optical splitters ») à une entrée et n sorties ou des modules de sélection de longueurs d'onde de type WSS ;
- les deuxièmes modules de sélection peuvent être par exemple des modules de sélection de longueurs d'onde de type WSS ;
- son aiguilleur spatial peut comprendre des moyens de couplage à balayage de faisceau (ou « beam steering ») ;
- l'un au moins des premiers modules de diffusion peut comporter au moins une première sortie, dite de transit. Dans ce cas, son deuxième étage comprend au moins un deuxième module de sélection, dédié au transit, et comprenant une deuxième entrée couplée directement à la première sortie de transit ;
- les moyens de couplage de l'aiguilleur spatial sont de préférence agencés de manière à faire varier la combinaison entrées/sorties choisie en fonction d'une commande.

L'invention propose également un second dispositif de commutation optique (ou interface de sortie) comprenant, d'une première part, un premier étage muni de premières entrées pouvant recevoir chacune au moins un canal d'une longueur d'onde, et de premières sorties pouvant délivrer chacune au moins un canal d'une longueur d'onde, d'une deuxième part un deuxième étage muni de deuxièmes entrées et de deuxièmes sorties pouvant délivrer chacune des canaux de longueurs d'onde différentes multiplexés reçus sur les deuxièmes entrées, et d'une troisième part, un troisième étage muni de troisièmes entrées couplées (au moins pour certaines) à des premières sorties, et de troisièmes sorties couplées (au moins pour certaines) à des deuxièmes entrées.

Ce second dispositif de commutation optique se caractérise par le fait que :
- son premier étage comporte Q premiers modules de fusion comprenant chacun q premières entrées et une première sortie,
- son deuxième étage comporte N deuxièmes modules de fusion comprenant chacun n deuxièmes entrées, pouvant recevoir chacune au moins un canal d'une longueur d'onde, et une deuxième sortie, avec Q ≥ Nxn, et
- son troisième étage comporte un aiguilleur spatial comprenant, d'une part, M' troisièmes entrées et M troisièmes sorties, avec M' ≥M, certaines au moins des premières sorties étant respectivement couplées à des troisièmes entrées et certaines au moins des deuxièmes entrées étant respectivement couplées à des troisièmes sorties, et d'autre part, des moyens de couplage capables de coupler chacune des troisièmes sorties à l'une des troisièmes entrées selon une combinaison entrées/sorties choisie.

On entend ici par « modules de fusion » aussi bien des modules de fusion sélective, tels que des modules de sélection de longueurs d'onde, que des modules de fusion non sélective, tels que des coupleurs optiques.

Le second dispositif de commutation optique selon l'invention peut comporter d'autres caractéristiques qui peuvent être prises séparément ou en combinaison, et notamment :
- son aiguilleur spatial peut être de type modulaire afin que le nombre M puisse être adapté en fonction des besoins définis par le nombre total de canaux à délivrer sur les deuxièmes sorties ;
- les premiers et deuxièmes modules de fusion peuvent être des coupleurs optiques à n entrées et une sortie ou des modules de sélection de longueurs d'onde de type WSS ;
- son aiguilleur spatial peut comprendre des moyens de couplage à balayage de faisceau (ou « beam steering ») ;
- l'un au moins des deuxièmes modules de fusion peut comporter au moins une deuxième entrée dite de transit. Dans ce cas, son premier étage comprend au moins un premier module de fusion comprenant une première sortie couplée directement à la deuxième entrée de transit ;
- les moyens de couplage de l'aiguilleur spatial sont de préférence agencés de manière à faire varier la combinaison entrées/sorties choisie en fonction d'une commande.

L'invention propose également un noeud de communication, pour un réseau (D)WDM, comprenant un commutateur électronique ou tout optique et au moins un premier et/ou un second dispositifs de commutation optique des types de ceux présentés ci-avant et couplés au commutateur électronique ou tout optique via des moyens de conversion optique/électrique ou des moyens de régénération tout optique.

D'autres caractéristiques et avantages de l'invention apparaîtront à l'examen de la description détaillée ci-après, et des dessins annexés, sur lesquels :
- la figure 1 illustre de façon schématique et fonctionnelle un exemple de réalisation d'un premier dispositif de commutation optique selon l'invention, de type interface d'entrée,
- la figure 2 illustre de façon schématique et fonctionnelle une variante du premier dispositif de commutation optique de la figure 1,
- la figure 3 illustre de façon schématique et fonctionnelle un exemple de réalisation d'un second dispositif de commutation optique selon l'invention, de type interface de sortie,
- la figure 4 illustre de façon schématique et fonctionnelle une variante du second dispositif de commutation optique de la figure 3.

Les dessins annexés pourront non seulement servir à compléter l'invention, mais aussi contribuer à sa définition, le cas échéant.

L'invention a pour objet de permettre la flexibilité et la modularité des dispositifs de commutation optique (transparents), de type « patch panel » (ou panneau de raccordement), qu'ils agissent en tant qu'interface d'entrée et/ou interface de sortie.

Dans ce qui suit, on considère à titre d'exemple non limitatif que les dispositifs de commutation optique sont destinés à être implantés dans des noeuds de communication de réseaux à multiplexage de longueurs d'onde (ou (D)WDM pour « (Dense) Wavelength Division Multiplexing »).

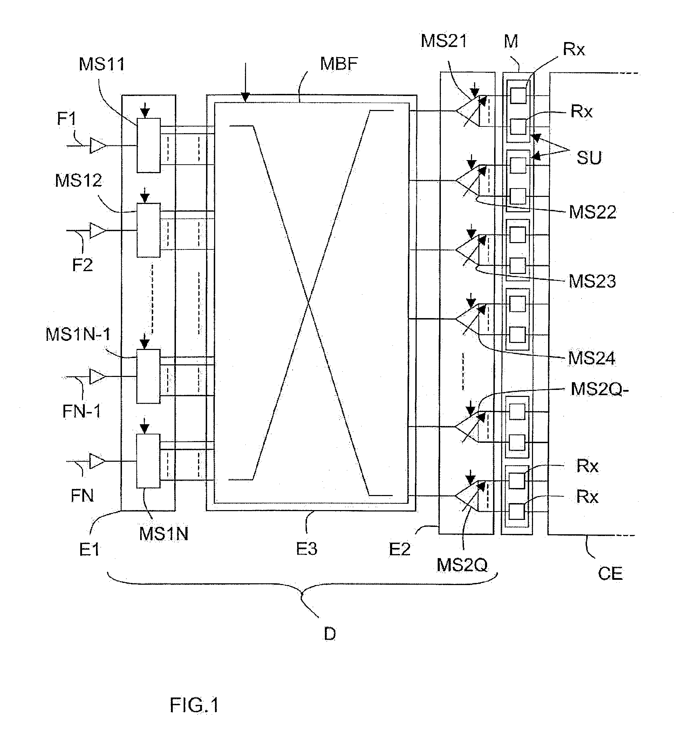

Sur la figure 1 se trouve représenté un exemple de réalisation schématique et fonctionnel d'un premier dispositif de commutation optique D, selon l'invention, de type interface d'entrée.

Un premier dispositif D, selon l'invention, comporte des premier E1, deuxième E2 et troisième E3 étages.

Le premier étage E1 comporte N premiers modules de diffusion MS1i (i = 1 à N) comprenant chacun une première entrée et n premières sorties.

Chaque première entrée définit un port d'entrée du premier dispositif D et est de ce fait destinée à être couplée à une fibre optique (d'entrée) Fi dans laquelle « circulent » des canaux de longueurs d'onde différentes multiplexés, également appelés multiplex spectraux de signaux optiques. Comme illustré, ce couplage s'effectue de préférence par l'intermédiaire d'un amplificateur. Dans ce qui suit, on appelle canal optique un canal associé à une longueur d'onde donnée.

Par exemple chaque fibre optique Fi est capable de transporter « c » canaux optiques.

Le nombre N de premiers modules de diffusion MS1i n'est pas nécessairement fixe. Il peut varier en fonction des besoins, et notamment en fonction du nombre de fibres d'entrée Fi.

Ces premiers modules de diffusion MS1i sont chargés d'aiguiller des canaux optiques multiplexés qu'ils reçoivent sur leur entrée en fonction de leurs longueurs d'onde respectives vers une ou plusieurs de leurs sorties. En d'autres termes, un premier module de diffusion MS1i assure une fonction de démultiplexage au moins partiel qui lui permet de délivrer sur chacune de ses sorties un ou plusieurs canaux optiques (voir même tous) d'un multiplex qu'il a reçu sur son entrée. Il s'agit par exemple de modules de diffusion non sélective, tels que des coupleurs (ou « optical splitters »), ou de modules de diffusion sélective, tels que des modules de sélection de longueurs d'onde de type WSS (pour « Wavelength Selective Switch »), présentés dans la partie introductive. Dans ce dernier cas, l'aiguillage des différents canaux optiques sur des sorties (chaque canal reçu ne pouvant être distribué que sur une unique sortie) est effectué en fonction d'une commande spécifique. Les modules WSS sont notamment décrits dans le document de T. Ducellier et al. « The MWS 1x4 : A High Performance Wavelength Switching Building Block », Conférence ECOC'2002, Copenhague, 9 septembre 2002, 2.3.1. Ces modules de sélection de longueurs d'onde de type WSS sont avantageux, notamment du fait qu'ils induisent de faibles pertes d'insertion comparées à celles induites par de simples coupleurs lorsque leur nombre de sorties est supérieur à 4.

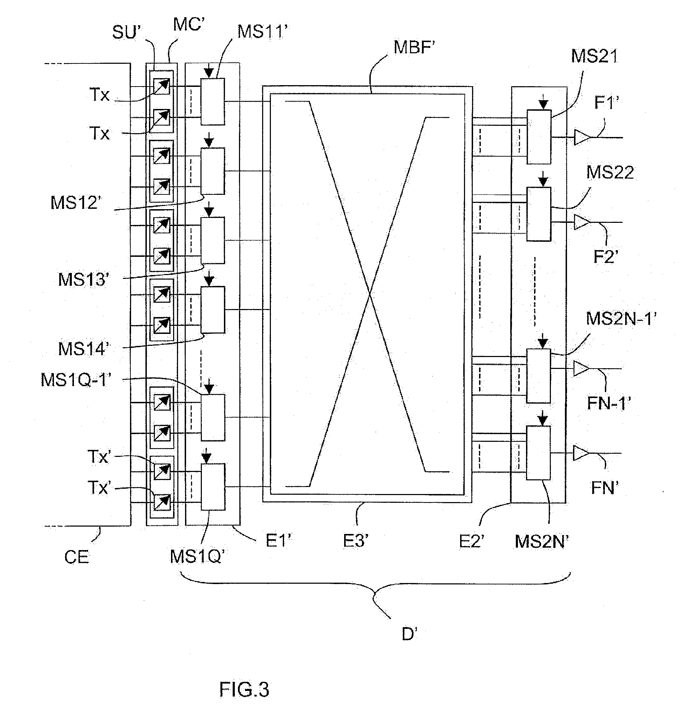

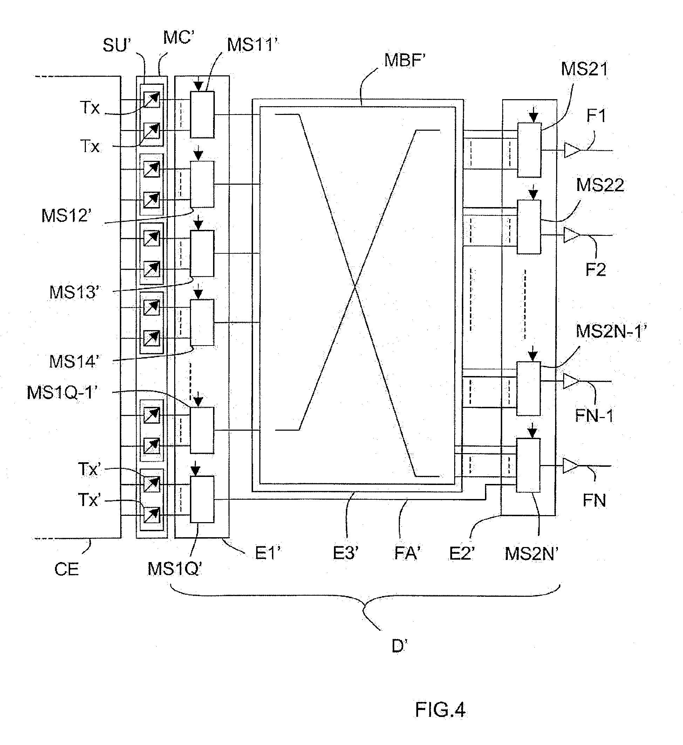

Comme on le verra plus loin, en référence aux figures 3 et 4, les modules de diffusion peuvent également assurer une fonction de multiplexage (éventuellement programmable) permettant de fournir sur leur sortie soit un canal optique sélectionné parmi les canaux optiques d'un multiplex reçu, soit un multiplex constitué d'un ensemble de canaux optiques sélectionnés parmi les canaux optiques reçus sur leurs entrées.

Il est important de noter que l'on peut constituer une cascade de modules de diffusion afin d'augmenter le nombre final de sorties.

Par ailleurs, il est important de noter que les canaux optiques qui sont aiguillés vers une sortie donnée d'un (premier) module de diffusion MS1i doivent être associés à des longueurs d'onde différentes.

Le deuxième étage E2 comporte Q deuxièmes modules de sélection MS2j (j = 1 à Q) comprenant chacun une deuxième entrée et q deuxièmes sorties qui définissent les ports de sortie du premier dispositif D. Ces deuxièmes modules de sélection MS2j (j = 1 à Q) sont des modules de type WSS, et sont donc réglables (ou « tunable ») en fonction d'une commande. Chaque deuxième sortie d'un deuxième module de sélection MS2j ne délivre sélectivement que l'un des canaux optiques multiplexés reçus par sa deuxième entrée. La sélection des canaux se fait en interne au moyen de filtres intégrés.

Pour que le premier dispositif D puisse fonctionner à pleine charge, il est obligatoire que Q soit supérieur ou égal au produit du nombre N de premiers modules de diffusion MS1i par le nombre n de premières sorties de chaque premier module de diffusion MS1i, soit Q ≥Nxn.

Le nombre Q de deuxièmes modules de sélection MS2j n'est pas nécessairement fixe. Il peut varier en fonction des besoins, et notamment en fonction du nombre total de canaux optiques transportés par les différentes fibres optiques d'entrée Fi.

Comme cela est illustré sur la figure 1, chaque deuxième sortie d'un deuxième module de sélection MS2j est par exemple couplée à un récepteur Rx (ou « receiver ») chargé d'effectuer la conversion des signaux optiques, contenus dans le canal optique qu'il reçoit, en signaux électriques. Les récepteurs Rx sont par exemple des photodétecteurs. Les q récepteurs Rx, couplés aux q deuxièmes sorties d'un deuxième module de sélection MS2j, constituent par exemple une sous-unité de réception SU. Par ailleurs, les différents récepteurs RX (ou les différentes sous-unités SU) peuvent faire partie d'une interface de conversion optique-électrique MC.

La sortie de chaque récepteur Rx est par exemple raccordée à l'une des bornes d'entrée d'un commutateur électronique CE.

Le troisième étage E3 comporte un aiguilleur spatial (assimilé à l'étage lui-même) comprenant M troisièmes entrées, M' troisièmes sorties et des moyens de couplage MBF chargés de coupler chacune des M troisièmes entrées à l'une des M' troisièmes sorties selon une combinaison entrées/sorties choisie. De préférence, les moyens de couplage MBF sont agencés de manière à faire varier la combinaison entrées/sorties choisie en fonction d'une commande.

On entend ici par « combinaison entrées/sorties » un ensemble de couples comprenant chacun l'une des M troisièmes entrées et l'une des M' troisièmes sorties devant délivrer les canaux optiques reçus par cette troisième entrée.

Il est important de noter que le nombre M est inférieur ou égal au nombre M' (M ≤M').

Certaines au moins des premières sorties des premiers modules de diffusion MS1i sont respectivement couplées à des troisièmes entrées, et certaines au moins des deuxièmes entrées des deuxièmes modules de sélection MS2j sont respectivement couplées à des troisièmes sorties.

On notera que certaines troisièmes entrées de l'aiguilleur spatial E3 peuvent ne pas être utilisées à un instant donné. De même, certaines troisièmes sorties de l'aiguilleur spatial E3 peuvent ne pas être utilisées à un instant donné. Par ailleurs, les nombres M et M' ne sont pas nécessairement fixes. Ils peuvent varier en fonction des besoins, et notamment en fonction du nombre total de canaux reçus sur les premières entrées. Ainsi, lors de l'installation du réseau l'aiguilleur spatial E3 peut être par exemple de type 16x16, puis il peut être ultérieurement transformé en aiguilleur 32x32 ou 64x64. Cependant, ce caractère modulaire n'est pas obligatoire.

Les moyens de couplage MBF sont par exemple du type dit « à balayage de faisceau » (ou « beam steering »). On peut par exemple utiliser les aiguilleurs spatiaux MxM' modulaires de la société ContinuumPhotonics, commercialisés sous la marque déposée DirectLight ®, série IG. Des informations sur ces aiguilleurs peuvent être obtenues sur le site Internet de la société ContinuumPhotonics à l'adresse Internet « www.continuumphotonics.com ».

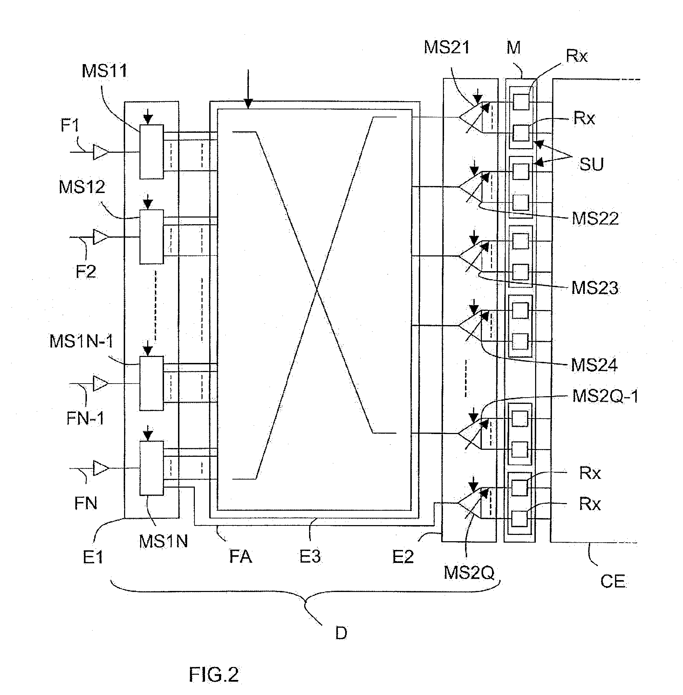

Dans une variante du premier dispositif D, illustrée sur la figure 2, l'un au moins des premiers modules de diffusion (ici MS1 N) peut comporter au moins une première sortie, dite de transit, destinée à être couplée, via une fibre optique additionnelle FA (par exemple), à la deuxième entrée d'un deuxième module de sélection (ici MS2Q), dédié au transit. La totalité ou une partie seulement du trafic optique qui parvient au niveau du premier module de diffusion MS1N peut ainsi être directement acheminée au niveau d'un deuxième module de sélection MS2Q, sans passer par l'aiguilleur spatial E3.

Sur la figure 3 se trouve représenté un exemple de réalisation schématique et fonctionnel d'un second dispositif de commutation optique D', selon l'invention, de type interface de sortie.

Un second dispositif D', selon l'invention, comporte des premier E1', deuxième E2' et troisième E3' étages.

Le premier étage E1' comporte Q premiers modules de fusion MS1(i = 1 à Q) comprenant chacun q premières entrées et une première sortie.

Chaque première entrée définit un port d'entrée du second dispositif D', destiné à être par exemple couplé à un émetteur Tx de signaux optiques mono-longueur d'onde, lui-même raccordé à une borne de sortie d'un commutateur électronique CE.

Chaque émetteur Tx est chargé d'effectuer la conversion des signaux électriques, qu'il reçoit du commutateur électronique CE, en signaux optiques contenus dans un canal optique associé à une longueur d'onde donnée. Les émetteurs Tx sont par exemple des sources laser dont la lumière est modulée, et qui sont accordables en longueur d'onde en fonction d'une commande. Les q émetteurs Tx, couplés aux q premières sorties d'un premier module de fusion MS1i', constituent par exemple une sous-unité d'émission SU'. Par ailleurs, les différents émetteurs Tx (ou les différentes sous-unités SU') peuvent faire partie d'une interface de conversion électrique-optique MC'.

Le nombre Q de premiers modules de fusion MS1i' n'est pas nécessairement fixe. Il peut varier en fonction des besoins, et notamment, comme on le verra plus loin, en fonction du nombre total de canaux optiques pouvant être transportés par les fibres optiques de sortie Fi' raccordées respectivement aux ports de sortie du second dispositif D'.

Chaque premier module de fusion MS1i' est chargé de multiplexer les canaux optiques qu'il reçoit respectivement sur ses q premières entrées afin de délivrer un multiplex de canaux optiques sur sa première sortie. Il s'agit par exemple de modules de fusion non sélective, tels que des coupleurs optiques (ou « optical couplers »), ou de modules de fusion sélective, tels que des modules de sélection de longueurs d'onde de type WSS (pour « Wavelength Selective Switch »), présentés dans la partie introductive.

Le deuxième étage E2' comporte N deuxièmes modules de fusion MS2j' (j = 1 à N) comprenant chacun n deuxièmes entrées et une deuxième sortie.

Chaque deuxième sortie définit un port de sortie du second dispositif D' et est de ce fait destinée à être couplée à une fibre optique (de sortie) Fi' dans laquelle peuvent « circuler » des canaux optiques multiplexés. Comme illustré, ce couplage à une fibre optique Fi' s'effectue de préférence par l'intermédiaire d'un amplificateur.

Chaque deuxième module de fusion MS2j' est chargé de multiplexer le ou les canaux optiques qu'il reçoit sur chacune de ses n deuxièmes entrées afin de délivrer un multiplex de canaux optiques sur sa deuxième sortie. Il s'agit par exemple de modules de fusion non sélective, tels que des coupleurs optiques (ou « optical couplers »), ou de modules de fusion sélective, tels que des modules de sélection de longueurs d'onde de type WSS (pour « Wavelength Selective Switch »), présentés dans la partie introductive.

Pour que le second dispositif D' puisse fonctionner à pleine charge il est obligatoire que Q soit supérieur ou égal au produit du nombre N de deuxièmes modules de fusion MS2j' par le nombre n de deuxièmes sorties de chaque deuxième module de fusion MS2j', soit Q ≥Nxn.

Le nombre N de deuxièmes modules de fusion MS2j' n'est pas fixe. Il varie préférentiellement en fonction des besoins, et notamment en fonction du nombre de fibres optiques de sortie Fi' utilisées.

Le troisième étage E3' comporte un aiguilleur spatial (assimilé à l'étage lui-même) comprenant M' troisièmes entrées, M troisièmes sorties et des moyens de couplage MBF' chargés de coupler chacune des M troisièmes sorties à l'une des M' troisièmes entrées selon une combinaison entrées/sorties choisie. De préférence, les moyens de couplage MBF' sont agencés de manière à faire varier la combinaison entrées/sorties choisie en fonction d'une commande.

On entend ici par « combinaison entrées/sorties » un ensemble de couples comprenant chacun l'une des M' troisièmes entrées et l'une des M troisièmes sorties devant délivrer les canaux optiques reçus par cette troisième entrée.

Il est important de noter que le nombre M est inférieur ou égal au nombre M' (M ≤M').

Certaines au moins des premières sorties des premiers modules de fusion MS1i' sont respectivement couplées à des troisièmes entrées, et certaines au moins des deuxièmes entrées des deuxièmes modules de fusion MS2j' sont respectivement couplées à des troisièmes sorties.

On notera que certaines troisièmes entrées et/ou certaines troisièmes sorties de l'aiguilleur spatial E3' peuvent ne pas être utilisées à un instant donné. Par ailleurs, les nombres M' et M ne sont pas nécessairement fixes. Il peuvent varier en fonction des besoins, et notamment en fonction du nombre total de canaux que peuvent accepter les fibres optiques de sortie Fi'. Ainsi, lors de l'installation du réseau l'aiguilleur spatial E3' peut être par exemple de type 16x16, puis il peut être ultérieurement transformé en aiguilleur 32x32 ou 64x64. Cependant, ce caractère modulaire n'est pas obligatoire.

Les moyens de couplage MBF' sont par exemple à balayage de faisceau (ou « beam steering »). Comme dans le cas du premier dispositif D, on peut par exemple utiliser les aiguilleurs spatiaux M'xM modulaires de la société ContinuumPhotonics, commercialisés sous la marque déposée DirectLight®, série IG.

Dans une variante illustrée sur la figure 4 à titre d'exemple non limitatif, la première sortie de l'un au moins des premiers modules de fusion (ici MS1Q'), du second dispositif D', peut être directement couplée, via une fibre optique additionnelle FA' (par exemple), à l'une des deuxièmes entrées, alors dite de transit, de l'un des deuxièmes modules de fusion (ici MS2N') du deuxième étage E2'. Une partie au moins du trafic optique qui parvient au niveau du premier module de fusion MS1Q' peut ainsi être directement acheminée sur la deuxième entrée de transit du deuxième module de fusion MS2N', sans passer par l'aiguilleur spatial E3'.

L'invention permet de réduire notablement les pertes d'insertion d'environ 7 dB par rapport aux dispositifs de l'art antérieur. Par conséquent, on peut soit utiliser des amplificateurs de plus faible puissance, par exemple 23 dBm en présence de fibres optiques transportant chacune 64 canaux.

Par ailleurs, dans le cas d'un premier dispositif (D) utilisant des premiers modules de diffusion (MS1i) de type WSS, seuls les canaux qui doivent être effectivement détectés sont présents dans le peigne optique qui parvient au niveau d'un deuxième module de diffusion (MS2j) chargé de séparer ces canaux. Par conséquent, lorsque N canaux doivent être séparés on a seulement besoin de N-1 ports de filtrage accordable et d'un port de transit, ce qui permet de réduire les coûts des deuxièmes étages (E2).

L'invention ne se limite pas aux modes de réalisation de premier et second dispositifs de commutation et de noeud de communication décrits ci-avant, seulement à titre d'exemple, mais elle englobe toutes les variantes que pourra envisager l'homme de l'art dans le cadre des revendications ci-après.

Ainsi, dans ce qui précède on a décrit des exemples de réalisation dans lesquels le dispositif de commutation était soit de type interface d'entrée, soit de type interface de sortie. Mais, en raison du principe dit « de retour inverse de la lumière », on peut envisager que le dispositif de commutation soit une interface d'entrée et de sortie.

Par ailleurs, dans ce qui précède on a décrit des exemples de réalisation dans lesquels le premier dispositif ou le deuxième dispositif était couplé à un commutateur électronique via des convertisseurs optoélectroniques. Mais, l'invention s'applique également aux situations dans lesquelles le premier dispositif ou le deuxième dispositif est couplé à un commutateur optique via des moyens de régénération tout optique.

## Revendications

1. Dispositif de commutation optique (D), comprenant i) un premier étage (E1) muni de premières entrées, propres à être couplées respectivement à des fibres optiques (Fi) dédiées au transport de canaux de longueurs d'onde différentes multiplexés, et de premières sorties, ii) un deuxième étage (E2) muni de deuxièmes entrées, propres à recevoir chacune au moins un canal d'une longueur d'onde, et de deuxièmes sorties propres à délivrer chacune un canal reçu sur l'une desdites deuxièmes entrées, et iii) un troisième étage (E3) muni de troisièmes entrées couplées, au moins pour certaines, à des premières sorties et de troisièmes sorties couplées, au moins pour certaines, à des deuxièmes entrées, **caractérisé en ce que** :
- ledit premier étage (E1) comporte N premiers modules de diffusion (MS1i) comprenant chacun une première entrée et n premières sorties propres chacune à délivrer au moins l'un des canaux multiplexés reçus par ladite première entrée,
- ledit deuxième étage (E2) comporte Q deuxièmes modules de sélection (MS2j) comprenant chacun une deuxième entrée et q deuxièmes sorties propres chacune à délivrer sélectivement l'un des canaux multiplexés reçus par ladite deuxième entrée, avec Q ≥Nxn, et
- ledit troisième étage (E3) comporte un aiguilleur spatial comprenant i) M troisièmes entrées et M' troisièmes sorties, avec M' ≥ M, certaines au moins desdites premières sorties étant respectivement couplées à des troisièmes entrées et certaines au moins des deuxièmes entrées étant respectivement couplées à des troisièmes sorties, et ii) des moyens de couplage (MBF) propres à coupler chacune desdites troisièmes entrées à l'une desdites troisièmes sorties selon une combinaison entrées/sorties choisie.

2. Dispositif selon la revendication 1, **caractérisé en ce que** ledit aiguilleur spatial (E3) est de type modulaire, de sorte que ledit nombre M soit adaptable en fonction du nombre total de canaux à recevoir sur lesdites premières entrées.

3. Dispositif selon l'une des revendications 1 et 2, **caractérisé en ce que** lesdits premiers modules de diffusion (MS1i) sont choisis dans un groupe comprenant au moins les coupleurs optiques à une entrée et n sorties et les modules de sélection de longueurs d'onde du type dit « WSS ».

4. Dispositif selon l'une des revendications 1 à 3, **caractérisé en ce que** lesdits deuxièmes modules de sélection (MS2j) sont des modules de sélection de longueurs d'onde du type dit « WSS ».

5. Dispositif selon l'une des revendications 1 à 4, **caractérisé en ce que** ledit aiguilleur spatial (E3) comprend des moyens de couplage (MBF) à balayage de faisceau.

6. Dispositif selon l'une des revendications 1 à 5, **caractérisé en ce que** l'un au moins desdits premiers modules de diffusion (MS1N) comporte au moins une première sortie, dite de transit, et **en ce que** ledit deuxième étage (E2) comprend au moins un deuxième module de sélection (MS2Q), dédié au transit, et comprenant une deuxième entrée couplée directement à ladite première sortie de transit.

7. Dispositif selon l'une des revendications 1 à 6, **caractérisé en ce que** lesdits moyens de couplage (MBF) de l'aiguilleur spatial (E3) sont agencés pour faire varier la combinaison entrées/sorties choisie en fonction d'une commande.

8. Dispositif de commutation optique (D'), comprenant i) un premier étage (E1') muni de premières entrées, propres à recevoir chacune au moins un canal d'une longueur d'onde, et de premières sorties, propres à délivrer chacune au moins un canal d'une longueur d'onde, ii) un deuxième étage (E2') muni de deuxièmes entrées et de deuxièmes sorties propres à délivrer chacune des canaux de longueurs d'onde différentes multiplexés reçus sur lesdites deuxièmes entrées, et iii) un troisième étage (E3') muni de troisièmes entrées couplées, au moins pour certaines, à des premières sorties, et de troisièmes sorties couplées, au moins pour certaines, à des deuxièmes entrées, **caractérisé en ce que** :
- ledit premier étage (E1') comporte Q premiers modules de fusion (MS1i') comprenant chacun q premières entrées et une première sortie,
- ledit deuxième étage (E2') comporte N deuxièmes modules de fusion (MS2j') comprenant chacun n deuxièmes entrées, propres à recevoir chacune au moins un canal d'une longueur d'onde, et une deuxième sortie, avec Q ≥Nxn, et
- ledit troisième étage (E3') comporte un aiguilleur spatial comprenant i) M' troisièmes entrées et M troisièmes sorties, avec M' ≥M, certaines au moins desdites premières sorties étant respectivement couplées à des troisièmes entrées et certaines au moins desdites deuxièmes entrées étant respectivement couplées à des troisièmes sorties, et ii) des moyens de couplage (MBF') propres à coupler chacune desdites troisièmes sorties à l'une desdites troisièmes entrées selon une combinaison entrées/sorties choisie.

9. Dispositif selon la revendication 8, **caractérisé en ce que** ledit aiguilleur spatial (E3) est de type modulaire, de sorte que ledit nombre M soit adaptable en fonction du nombre total de canaux à délivrer sur lesdites deuxièmes sorties.

10. Dispositif selon l'une des revendications 8 et 9, **caractérisé en ce que** lesdits premiers (MS1i') et deuxièmes (MS2j') modules de fusion sont choisis dans un groupe comprenant au moins les coupleurs optiques à n entrées et une sortie et les modules de sélection de longueurs d'onde du type dit « WSS ».

11. Dispositif selon l'une des revendications 8 à 10, **caractérisé en ce que** ledit aiguilleur spatial (E3') comprend des moyens de couplage (MBF') à balayage de faisceau.

12. Dispositif selon l'une des revendications 8 à 11, **caractérisé en ce que** l'un au moins desdits deuxièmes modules de fusion (MS2N') comporte au moins une deuxième entrée dite de transit, et **en ce que** ledit premier étage (E1) comprend au moins un premier module de sélection (MS1Q') comprenant une première sortie couplée directement à ladite deuxième entrée de transit.

13. Dispositif selon l'une des revendications 8 à 12, **caractérisé en ce que** lesdits moyens de couplage (MBF') de l'aiguilleur spatial (E3') sont agencés pour faire varier la combinaison entrées/sorties choisie en fonction d'une commande.

14. Noeud de communication pour un réseau optique à multiplexage de longueurs d'onde (RA), **caractérisé en ce qu'**il comprend un commutateur électronique (CE) et au moins un dispositif de commutation optique (D, D') selon l'une des revendications précédentes, couplé audit commutateur électronique (CE) via des moyens de conversion optique/électrique (MC, MC').

15. Noeud de communication pour un réseau optique à multiplexage de longueurs d'onde (RA), **caractérisé en ce qu'**il comprend un commutateur optique (CE) et au moins un dispositif de commutation optique (D, D') selon l'une des revendications 1 à 13, couplé audit commutateur optique (CE) via des moyens de régénération tout optique.
